# EUROPEAN PATENT APPLICATION

(11) **EP 4 714 519 A1**
(43) Date of publication of application: **25.03.2026**
(21) Application number: 25201774.4
(22) Date of filing: 12.09.2025
(51) Int. Cl.: B01D 19/00

(54) **DEAERATION APPARATUS, SUBSTRATE PROCESSING APPARATUS INCLUDING THE SAME, DEAERATION METHOD, AND LIQUID SUPPLY METHOD**

(30) Priority: 24.09.2024 JP 2024165265
(71) Applicant: SCREEN Holdings Co., Ltd., Kyoto-shi, Kyoto 602-8585 (JP)
(72) Inventor: KASHIYAMA, Masahito, Kyoto, 602-8585 (JP)
(74) Representative: Kilian Kilian & Partner mbB

(57) **Abstract**

A deaeration apparatus of the present invention includes a tank (11) that stores a liquid to be deaerated, a circulation pipe having one end connected to an outflow port of the tank and the other end connected to an inflow port of the tank, a pump (15) that is provided in the circulation pipe and sucks and feeds the liquid in the tank, and a foaming device (6a) that is provided in the circulation pipe and causes the liquid to flow through a throttle portion having a narrowed flow path section to generate air bubbles from the liquid, wherein deaeration of the liquid stored in the tank (11) is performed by circulating the liquid between the tank (11) and the foaming device (6a).

## Description

### Background of the invention

The present invention relates to a deaeration apparatus that removes dissolved gases from a liquid, a substrate processing apparatus including the deaeration apparatus, and a deaeration method for removing dissolved gases from a liquid. The substrate is, for example, a semiconductor wafer, a liquid crystal display substrate, an organic electroluminescence (EL) substrate, a flat panel display (FPD) substrate, an optical display substrate, a magnetic disk substrate, an optical disk substrate, a magneto-optical disk substrate, a photomask substrate, or a solar cell substrate.

### Description of the Related Art

JP 2000-173902 A describes a substrate processing apparatus including a buffer tank that stores a liquid and a trap tank that holds the liquid flowing out of the buffer tank with a pressurized gas. The pressure in the trap tank is atmospheric pressure. Thus, the liquid flowing out of the buffer tank is foamed in the trap tank. This causes deaeration, and the deaerated liquid is used for various types of substrate processing. This method is less expensive than a method in which a hollow fiber membrane element is installed in the middle of piping. With this method, there is no mixing of particles derived from the hollow fiber membrane element, and this method is easily introduced into an actual apparatus.

### <List of documents>

JP 2000-173902

However, it is difficult to perform sufficient deaeration in the configuration described above. That is, it is difficult to remove the gases dissolved in the liquid by performing deaeration treatment only one time. The conventional method does not include a configuration for adjusting the degree of the deaeration treatment. Thus, there is a case where the liquid on which sufficient deaeration treatment has not been performed has to be used for substrate processing.

The present invention has been made in view of such circumstances, and an object of the present invention is to provide a deaeration apparatus capable of reliably performing deaeration treatment and a substrate processing apparatus including the deaeration apparatus. Another object of the present invention is to provide a deaeration treatment method capable of reliably performing deaeration treatment.

### Summary of the invention

To solve the problem described above, the present invention has the following configurations.

That is, a deaeration apparatus of the present invention includes:
a tank that stores a liquid to be deaerated;
a circulation pipe having one end connected to an outflow port of the tank and the other end connected to an inflow port of the tank;
a pump that is provided in the circulation pipe and sucks and feeds the liquid in the tank; and
a foaming device that is provided in the circulation pipe and causes the liquid to flow through a throttle portion having a narrowed flow path section to generate air bubbles from the liquid,
in which deaeration of the liquid stored in the tank is performed by circulating the liquid between the tank and the foaming device.

[Operation and Effect] According to the configuration described above, the deaeration apparatus includes a tank that stores a liquid to be deaerated, a circulation pipe having one end connected to an outflow port of the tank and the other end connected to an inflow port of the tank, a pump that is provided in the circulation pipe and sucks and feeds the liquid in the tank, and a foaming device that is provided in the circulation pipe and causes the liquid to flow through a throttle portion having a narrowed flow path section to generate air bubbles from the liquid, wherein deaeration of the liquid stored in the tank is performed by circulating the liquid between the tank and the foaming device. With this configuration, the degree of deaeration treatment can be easily changed by changing the degree of circulation. For a liquid on which deaeration is difficult to be performed, circulation of the liquid between the tank and the foaming device can be performed many times according to the degree of difficulty of deaeration. Thus, the configuration described above can reliably perform deaeration of the liquid.

In the deaeration apparatus,
the foaming device preferably includes:
an adjustment mechanism that adjusts a sectional area of a flow path in the throttle portion; and
a foaming device controller that controls the adjustment mechanism, and
the foaming device controller preferably controls the adjustment mechanism to adjust the sectional area of the flow path in the throttle portion as deaeration treatment proceeds.

[Operation and Effect] According to the configuration described above, the foaming device includes an adjustment mechanism that adjusts a sectional area of a flow path in the throttle portion and a foaming device controller that controls the adjustment mechanism, and the foaming device controller controls the adjustment mechanism to adjust the sectional area of the flow path in the throttle portion as deaeration treatment proceeds. This configuration can continue the deaeration treatment on the liquid while changing the deaeration conditions. Thus, the deaeration treatment can be performed under appropriate conditions.

The deaeration apparatus preferably includes
a sensor that detects a deaeration state of the liquid during deaeration treatment; and
a circulation controller that controls the pump,
in which the circulation controller preferably controls the pump based on an output of the sensor.

[Operation and Effect] According to the configuration described above, the deaeration apparatus includes a sensor that detects a deaeration state of the liquid during deaeration treatment and a circulation controller that controls the pump, wherein the circulation controller controls the pump based on an output of the sensor. This configuration can change the mode of circulation of the liquid according to the deaeration state. Thus, the deaeration of the liquid can be more reliably performed.

In the deaeration apparatus
the foaming device is preferably provided on an upstream side of the pump.

[Operation and Effect] According to the configuration, the foaming device is provided on an upstream side of the pump. With this configuration, the foaming device can easily foam the liquid.

The deaeration apparatus preferably includes
a release passage through which the liquid on which deaeration treatment has been performed is released.

[Operation and Effect] According to the configuration, a release passage through which the deaerated liquid is released is provided. This configuration makes it easy to feed the deaerated liquid into the substrate processing apparatus through the release passage.

The present specification also discloses an invention related to a substrate processing apparatus including:
the deaeration apparatus described above; and
a substrate processing chamber that performs predetermined liquid processing on a substrate,
in which the substrate processing chamber includes a nozzle that discharges the liquid supplied from the deaeration apparatus.

[Operation and Effect] According to the configuration described above, a substrate processing apparatus that exhibits the effects of the deaeration apparatus of the present invention can be provided.

The present specification also describes an invention of a substrate processing apparatus including the deaeration apparatus. That is, the present specification describes about a substrate processing apparatus including:
the deaeration apparatus described above;
a substrate processing chamber that performs predetermined liquid processing on a substrate; and
a liquid supply unit that supplies the liquid to the substrate processing chamber,
in which the substrate processing chamber includes a nozzle that discharges the liquid supplied from the liquid supply unit,
the liquid supply unit includes:
   a first deaeration apparatus;
   a second deaeration apparatus; and
   a switching controller that switches modes of the deaeration apparatuses,
the switching controller:
   sets the first deaeration apparatus to a liquid supply mode and the second deaeration apparatus to a deaeration mode to supply the liquid to the substrate processing chamber through the first deaeration apparatus and perform deaeration treatment on the liquid through the second deaeration apparatus; and
   sets the second deaeration apparatus to the liquid supply mode and the first deaeration apparatus to the deaeration mode to supply the liquid to the substrate processing chamber through the second deaeration apparatus and perform deaeration treatment on the liquid through the first deaeration apparatus.

[Operation and Effect] According to the configuration, the first deaeration apparatus is set to a liquid supply mode, and the second deaeration apparatus is set to a deaeration mode, whereby the liquid is supplied to the substrate processing chamber through the first deaeration apparatus, and at the same time, deaeration treatment is performed on the liquid through the second deaeration apparatus. Then, the second deaeration apparatus is set to the liquid supply mode, and the first deaeration apparatus is set to the deaeration mode, whereby the liquid is supplied to the substrate processing chamber through the second deaeration apparatus, and at the same time, deaeration treatment is performed on the liquid through the first deaeration apparatus. This configuration can perform the deaeration treatment and the liquid supply simultaneously in parallel. Thus, when the tank of one deaeration apparatus becomes empty because of liquid supply, the liquid can be continuously supplied from the tank of the other deaeration apparatus in which the deaeration treatment has been completed.

The present specification also described about a deaeration method for generating air bubbles from a liquid to be deaerated by circulating the liquid to be deaerated through a foaming device including a throttle portion, the method including:
supplying the liquid from a tank to the foaming device and returning the liquid released from the foaming device to the tank to circulate the liquid between the tank and the foaming device.

[Operation and Effect] According to the configuration, a deaeration method that exhibits the same effects as the effects of the deaeration apparatus.

The present specification also disloses an invention related to a liquid supply method for supplying a deaerated liquid that has been deaerated by generating air bubbles from a liquid to be deaerated by circulating the liquid to be deaerated in a foaming device including a throttle portion, the liquid supply method including:
supplying a liquid from a first tank to a first foaming device and returning the liquid released from the first foaming device to the first tank to circulate the liquid between the first tank and the foaming device and deaerate the liquid, and at the same time, supplying a deaerated liquid from a second tank that stores the deaerated liquid; and
supplying a liquid from the second tank to a second foaming device and returning the liquid released from the second foaming device to the second tank to circulate the liquid between the second tank and the foaming device and deaerate the liquid, and at the same time, supplying a deaerated liquid from the first tank that stores the deaerated liquid.

[Operation and Effect] According to the present invention, supply of liquid with the second tank is performed while deaeration treatment on liquid is performed in the first tank, and supply of liquid with the first tank is performed while deaeration treatment on liquid is performed in the second tank. Such a configuration can perform liquid supply while deaeration is performed on the liquid in the first tank or the second tank.

According to the present invention, a deaeration apparatus capable of reliably performing deaeration treatment and a substrate processing apparatus including the deaeration apparatus can be provided. According to the present invention, a deaeration treatment method capable of reliably performing deaeration treatment can also be provided.

### Brief of description of the drawings

FIG. 1 is a plan view for describing an overall configuration of a substrate processing apparatus according to Example;
FIG. 2 is a piping diagram for describing a configuration of a deaeration unit according to Example and around the deaeration unit;
FIG. 3 is a sectional view for describing a deaeration mode of the deaeration apparatus according to Example;
FIG. 4 is a sectional view for describing the deaeration mode of the deaeration apparatus according to Example;
FIG. 5 is a sectional view for describing a configuration of a foaming device according to Example;
FIG. 6 is a sectional view for describing the configuration of the foaming device according to Example;
FIG. 7 is a sectional view for describing the configuration of the foaming device according to Example;
FIG. 8 is a flowchart for describing an operation of the deaeration unit according to Example;
FIG. 9 is a piping diagram for describing an operation of the deaeration unit according to Example;
FIG. 10 is a piping diagram for describing an operation of the deaeration unit according to Example;
FIG. 11 is a piping diagram for describing an operation of the deaeration unit according to Example;
FIG. 12 is a piping diagram for describing an operation of the deaeration unit according to Example;
FIG. 13 is a piping diagram for describing an operation of the deaeration unit according to Example;
FIG. 14 is a piping diagram for describing an operation of the deaeration unit according to Example;
FIG. 15 is a sectional view for describing a configuration of a deaeration apparatus according to a first modification of Example;
FIG. 16 is a piping diagram for describing a configuration of the deaeration apparatus according to the first modification of Example;
FIG. 17 is a piping diagram for describing a configuration of the deaeration apparatus according to the first modification of Example;
FIG. 18 is a plan view for describing an overall configuration of a substrate processing apparatus according to the first modification of Example; and
FIG. 19 is a piping diagram for describing a configuration of a deaeration unit according to the first modification of Example and around the deaeration unit. Description of the preferred embodiments

A deaeration apparatus according to the present invention is mounted on, for example, a substrate processing apparatus that processes a semiconductor substrate. Thus, as a mode for carrying out the present invention, a substrate processing apparatus that performs necessary substrate processing before and after exposure processing in a photolithography process will be described as an example.

### Embodiment 1

### <1. Overall Configuration>

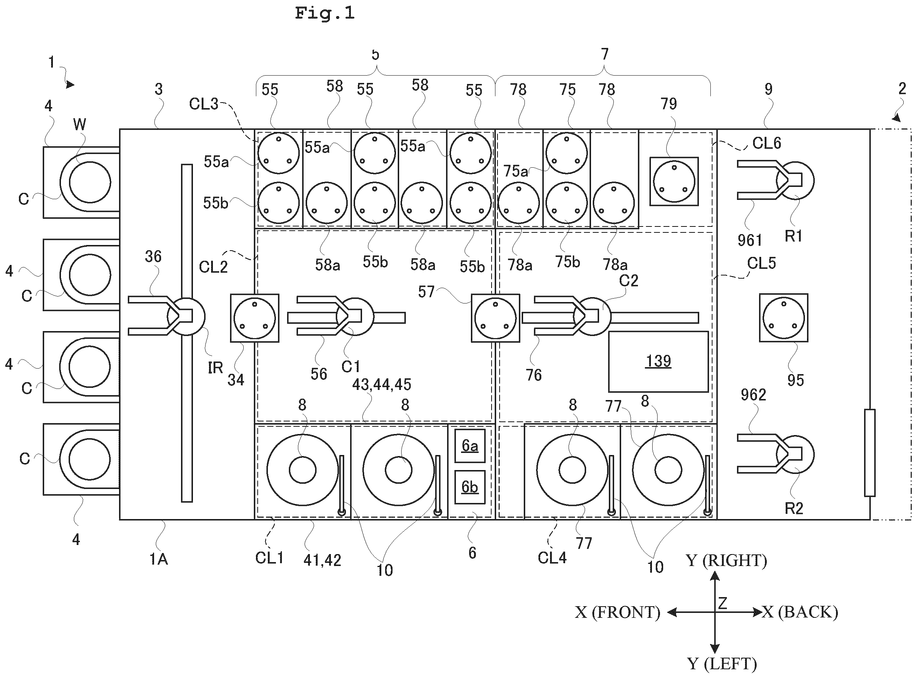

FIG. 1 is a plan view illustrating an overall configuration of a substrate processing apparatus of the present example. A substrate processing apparatus 1 of the present example is connected to an exposure machine 2 for exposure which is an external apparatus. Further, the substrate processing apparatus 1 includes an indexer block 3, a coater block 5, a developer block 7, and an interface block 9. The indexer block 3, the coater block 5, the developer block 7, and the interface block 9 are aligned in this order and form the substrate processing apparatus 1. The substrate processing apparatus 1 includes a housing 1A that houses each block. The housing 1A has a substantially rectangular shape in plan view. The housing 1A is provided with a load port 4 projecting from a wall surface on one end side of the housing 1A.

In this specification, for convenience, the directions in which the indexer block 3, the coater block 5, the developer block 7, and the interface block 9 in the substrate processing apparatus 1 are aligned are referred to as forward-backward directions (X directions). The X directions extend horizontally. The direction from the indexer blocks 5 toward the indexer block 3 in the substrate processing apparatus 1 is referred to as forward direction. The direction opposite to the forward direction is referred to as backward direction. The horizontal directions orthogonal to the X directions are referred to as leftward and rightward directions (Y directions). The Y directions are also the directions in which a plurality of load ports 4 are aligned. One of the Y directions is referred to as rightward direction for convenience, and the direction opposite to the rightward direction is referred to as leftward direction. Heights direction (Z directions) are orthogonal to both the X directions and the Y directions and are matched with vertical directions. In each drawing, front, back, right, left, up, and down are appropriately shown for reference.

### <2. Indexer Block>

As illustrated in FIG. 1, the indexer block 3 includes a load port 4 that is an entrance of a carrier C when the carrier C storing a plurality of substrates W in a horizontal orientation at predetermined intervals in the Z directions is input into the block. The carrier C can be placed on the load port 4.

A plurality of (for example, 25) substrates W are stacked and stored in one carrier C. The carrier C storing unprocessed substrates W to be loaded into the substrate processing apparatus 1 is first placed on the load port 4.

In the indexer block 3, an indexer robot IR capable of conveying substrates W in a horizontal orientation one by one is disposed. The indexer robot IR can access any of a path 34 provided at the boundary between the indexer block 3 and the coater block 5 illustrated in FIG. 1 and four load ports 4, and delivers the substrates W between the path 34 and the carrier C installed in the load port 4. A hand 36 realizes the delivery of the substrates W by the indexer robot IR.

### <3. Coater Block>

The coater block 5 is configured to mainly form a photoresist layer on the substrate W before exposure processing. The coater block 5 includes a second column CL2 located at the back of the path 34, a first column CL1 provided on the left of the second column CL2, and a third column CL3 provided on the right of the second column CL2. Thus, the second column CL2 is located at a position sandwiched between the first column CL1 and the third column CL3 from the right and left.

In the first column CL1, chemical liquid processing chambers having a spin chuck 8 that rotatably supports the substrate W and a nozzle 10 that discharges a chemical liquid are aligned in the X directions. Thus, the chemical liquid processing chamber is configured to apply the chemical liquid to a surface of the substrate W. The chemical liquid processing chamber includes a BARC chamber 45 for forming an antireflection film and resist chambers 41, 42, 43, and 44 for forming a photoresist layer. In the first column CL1 of FIG. 1, a state in which two resist chambers 41, 42, 43, and 44 or two BARC chambers 45 are aligned in the forward-backward directions is described. In the first column CL1, the BARC chamber 45 and the resist chambers 41, 42, 43, and 44 are stacked across three layers. The relationship in the upward-downward directions between the BARC chamber 45 and the resist chambers 41, 42, 43, and 44 can be appropriately changed. In the first column CL1, four or more chemical liquid processing chambers may be provided.

An edge exposure unit is provided in a third column CL3 to be described later or a sixth column CL6 in a developer block 7 to be described later. The edge exposure unit can perform edge exposure related to removal of the photoresist layer at a peripheral edge portion of the substrate W.

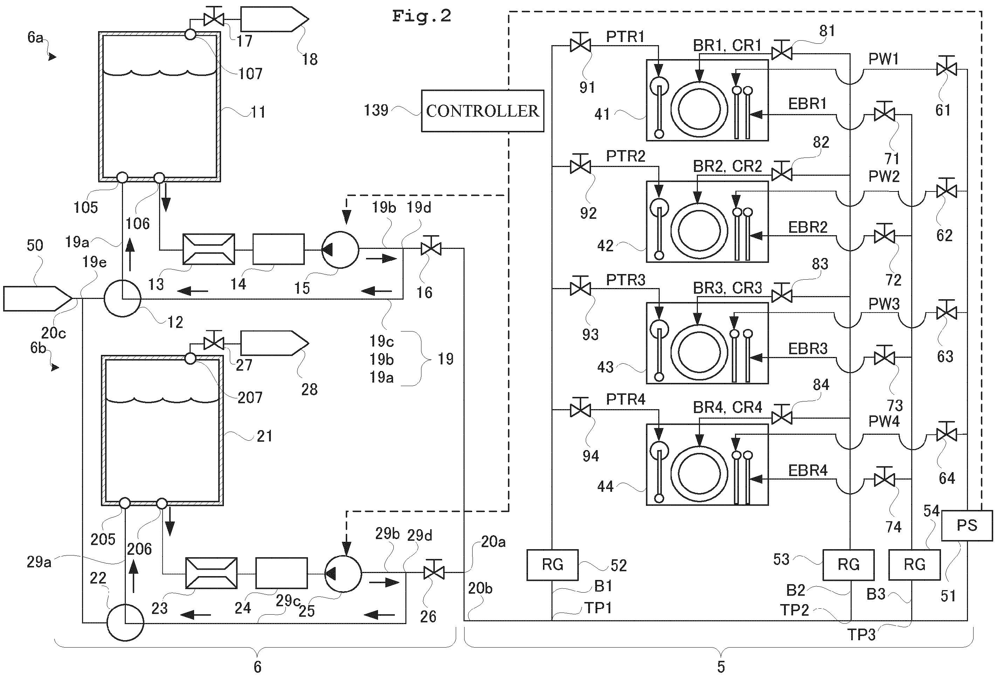

In addition, the first column CL1 is provided with a deaeration chamber 6 including a first deaeration apparatus 6a and a second deaeration apparatus 6b that provide a deaerated solvent to the resist chambers 41, 42, 43, and 44. The configuration of the deaeration chamber 6 will be described later with reference to FIG. 2. The deaeration chamber 6 corresponds to a liquid supply unit of the present invention that supplies liquid to the resist chambers 41, 42, 43, and 44 described later. The deaeration chamber 6 of the present example can also supply liquid to the BARC chamber 45.

The second column CL2 is a passage through which a first center robot C1 that conveys the substrate W in the horizontal orientation moves back and forth. The first center robot C1 can access, in addition to the path 34, the BARC chamber 45 of the first column CL1, the resist chambers 41, 42, 43, and 44, a thermal processing chamber 55 and a cooling unit 58, which will be described later, provided in the third column CL3, and a path 57 provided at the boundary between the coater block 5 and the developer block 7 illustrated in FIG. 1. The resist chambers 41, 42, 43, and 44 correspond to substrate processing chambers of the present invention.

The first center robot C1 is movable forward and backward in the X directions and movable upward and downward in the Z directions so as to be able to convey the substrate W to each accessible position. The first center robot C1 can direct a hand 56 holding the substrate W to any of the forward, backward, rightward, and leftward directions.

In the third column CL3, a thermal processing chamber 55 for heating the substrate W and a cooling unit 58 for cooling the substrate W are aligned in the X directions. In the thermal processing chamber 55, a circular hot plate 55a for heating the substrate W and a circular post-heating processing plate 55b for performing post-heating processing for lowering the temperature of the high-temperature substrate W are aligned in the Y directions. On the other hand, the cooling unit 58 is provided with a circular cooling processing plate 58a that cools the substrate W at room temperature. In the third column CL3, the thermal processing chambers 55 or the cooling units 58 are not only aligned in the X directions but also stacked in the Z directions to form a stacked body of chambers. The number of layers included in the stacked bodies can be appropriately changed.

### <4. Developer Block>

The developer block 7 is configured to mainly develop the substrate W after the exposure processing. The developer block 7 includes a fifth column CL5 located at the back of the path 57, a fourth column CL4 provided on the left of the fifth column CL5, and a sixth column CL6 provided on the right of the fifth column CL5. Thus, the fifth column CL5 is located at a position sandwiched between the fourth column CL4 and the sixth column CL6 from the right and left.

In the fourth column CL4, developing chambers 77 having a spin chuck 8 that rotatably supports the substrate W and a nozzle 10 that discharges a chemical liquid are aligned in the X directions. In the fourth column CL4 of FIG. 1, a state in which two developing chambers 77 are aligned in the forward-backward directions is described. In the fourth column CL4, developing chambers 77 are stacked. The number of layers included in the stacked bodies formed of the developing chambers 77 can be appropriately changed.

The fifth column CL5 is a passage through which a second center robot C2 that conveys the substrate W in the horizontal orientation moves back and forth. The second center robot C2 can access, in addition to the path 57, the developing chambers 77 included in the fourth column CL4, and a thermal processing chamber 75, a cooling unit 78, and a path 79, which will be described later, provided in the sixth column CL6.

The second center robot C2 is movable forward and backward in the X directions and movable upward and downward in the Z directions so as to be able to convey the substrate W to each accessible position, in the same manner as the first center robot C1. The second center robot C2 can direct a hand 76 holding the substrate W to any of the forward, backward, rightward, and leftward directions.

In the sixth column CL6, a thermal processing chamber 75 for heating the substrate W and a cooling unit 78 for cooling the substrate W are aligned in the X directions. The thermal processing chamber 75 has the same configuration as the thermal processing chamber 55 in the third column. Thus, in the thermal processing chamber 75, a circular hot plate 75a and a circular post-heating processing plate 75b are aligned in the Y directions. The cooling unit 78 has the same configuration as the cooling unit 58 of the third column CL3. Thus, the cooling unit 78 is provided with a circular cooling processing plate 78a.

The path 79 is provided at the back end of the sixth column CL6. The substrate W in the horizontal orientation can move between the developer block 7 and the interface block 9 via the path 79.

### <5. Interface Block>

The interface block 9 includes a path 95 capable of cooling the substrate W that has been placed thereon, a first robot R1 capable of accessing the path 95 and the path 79, and a second robot R2 capable of accessing the path 95 and the exposure machine 2. The first robot R1 includes a hand 961 capable of gripping the substrate W in the horizontal orientation placed on the path 79, and the second robot R2 includes a hand 962 capable of gripping the substrate W in the horizontal orientation placed on the path 95.

The paths 95 are stacked in the Z directions to form a stacked body.

### <6. Exposure Machine>

The exposure machine 2 receives the substrate W before the exposure processing conveyed by the second robot R2, performs the exposure processing, and prints a circuit pattern of the device on the photoresist layer of the substrate W. The substrate W after the exposure processing is delivered to the second robot R2. Specific examples of the configuration of the exposure machine 2 include a stepper and a scanner.

### <7. Controller>

As illustrated in FIG. 1, the substrate processing apparatus 1 includes a controller 139 related to control of the apparatus. Although not illustrated in FIG. 1, the controller 139 is provided with a corresponding storage unit. The controller 139 is configured by, for example, a central processing unit (CPU). A specific configuration of the controller is not limited, and for example, the controls related to the substrate processing apparatus 1 may be configured by a single processor, or each control may be configured by an individual processor.

Examples of the control related to the controller 139 include control related to the indexer robot IR, the first center robot C1, the second center robot C2, the first robot R1, and the second robot R2. The controller 139 particularly constitutes a foaming device controller 134 to be described later and a circulation controller of the present invention.

That is, the controller 139 of the present example is configured to control a pump 15 and a pump 25. The controller controls the pump 15 based on the output of a sensor 14. Specifically, when it can be determined by the sensor 14 that deaeration has ended, the controller 139 stops the pump 15 and ends a deaeration mode to be described later.

In addition, the controller 139 of the present example constitutes a switching controller of the present invention. That is, the controller 139 of the present example has a function of switching the apparatus used for deaeration treatment between the first deaeration apparatus 6a and the second deaeration apparatus 6b. A state in which the controller 139 of the present example exhibits a function as the switching controller will be described later.

The storage unit stores programs, parameters, and the like related to control. The storage unit may be configured by a single device or may be configured by individual devices corresponding to the respective controls. The substrate processing apparatus 1 of the present example has no particular limitation on the configuration of the device that realizes the storage unit.

### <8. Deaeration Chamber>

FIG. 2 illustrates a configuration of the deaeration chamber 6 and a state in which the deaeration chamber 6 is connected to various pipes included in the resist chambers 41, 42, 43, and 44. As illustrated in FIG. 2, the deaeration chamber 6 is provided with a plurality of deaeration apparatuses. The deaeration chamber 6 of the present example includes a first deaeration apparatus 6a and a second deaeration apparatus 6b. In the present example, the first deaeration apparatus 6a and the second deaeration apparatus 6b are configured to alternately deaerate a solvent so that the supply of deaerated liquid does not stop.

As the solvent, a solvent of a photoresist liquid used for the substrate processing with the resist chambers 41, 42, 43, and 44 at the time of forming the resist film can be used. Specific examples of the solvent include organic solvents such as thinner, propylene glycol monomethyl ether (PGME), propylene glycol monomethyl ether acetate (PGMEA), ethyl lactate, cyclohexane, 4-methyl-2-pentanol (MIBC), and isopropyl alcohol (IPA).

A specific configuration of the first deaeration apparatus 6a will be described with reference to FIG. 2. As illustrated in FIG. 2, the first deaeration apparatus 6a includes a first tank 11 that stores a solvent, a three-way valve 12 that can inject the solvent into the first tank 11, a foaming device 13 that foams the solvent flowing out of the first tank 11, the sensor 14 that is provided on the downstream side of the foaming device 13 and detects a foaming state of the solvent, the pump 15 provided on the downstream side of the sensor 14, and a valve 16 provided on the downstream side of the pump 15. The first tank 11 corresponds to a tank of the present invention, and is configured to store a liquid to be deaerated. The foaming device 13 is configured to generate air bubbles from the liquid. The pump 15 is configured to circulate the liquid to the foaming device 13.

The first tank 11 is provided with three through holes. That is, an inflow port 105 and an outflow port 106 are provided in the bottom surface of the first tank 11, and an exhaust port 107 is provided in a lid body of the first tank 11.

### <9. First Deaeration Apparatus: Pipe and Three-Way Valve>

The pipes and the three-way valve 12 related to the first deaeration apparatus 6a will be described. The inflow port 105 of the first tank 11 is located downstream of the three-way valve 12, and the inflow port 105 and the three-way valve 12 are connected to each other via an inflow pipe 19a.

The three-way valve 12 is connected to a solvent supply source 50 through an upstream pipe 20c. The three-way valve 12 is connected to the pump 15 through a return pipe 19c. Thus, the three-way valve 12 can communicate the solvent supply source 50 with the inflow port 105, and can also communicate the pump 15 with the inflow port 105. The three-way valve 12 can select between whether to allow the inflow port 105 and the solvent supply source 50 to communicate with each other or to allow the inflow port 105 and the pump 15 to communicate each other. For example, since the three-way valve 12 in FIG. 2 is in a state where the flow path from the solvent supply source 50 to the inflow port 105 is closed, the solvent does not flow from the solvent supply source 50 to the inflow port 105. A state in which the solvent flows from the solvent supply source 50 to the inflow port 105 will be described later. The three-way valve 12 may be in a closed state in which neither the solvent supply source 50 nor the pump 15 communicates with the inflow port 105. The three-way valve 12 in the closed state will also be described later.

The return pipe 19c corresponds to a pipe of the present invention. The return pipe is configured to allow the first tank 11 and the foaming device 13 to communicate with each other and circulate the liquid between the first tank 11 and the foaming device 13.

The outflow port 106 of the first tank 11 is located upstream of the foaming device 13. The outflow port 106, the foaming device 13, the sensor 14, the pump 15, and the valve 16 are disposed in this order from upstream to downstream, and they are connected in series to each other via the outflow pipe 19b. Thus, the solvent flowing out from the outflow port 106 of the first tank 11 passes through the foaming device 13, the sensor 14, and the pump 15 to reach the valve 16. The outflow pipe 19b corresponds to a release passage of the present invention.

The return pipe 19c is a pipe branching from the outflow pipe 19b between the pump 15 and the valve 16. The return pipe 19c allows the outflow pipe 19b from the branch point 19d and the three-way valve 12 to communicate with each other.

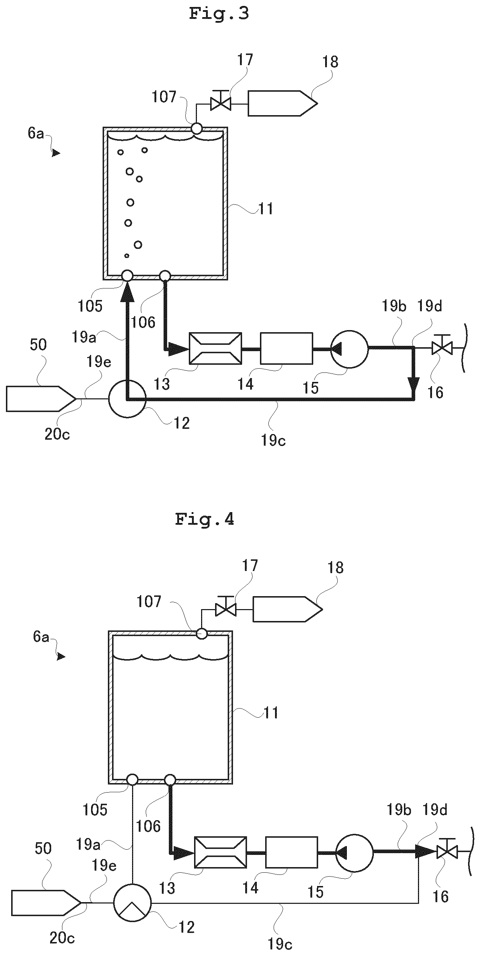

As illustrated in FIG. 3, when the three-way valve 12 of the present example is switched to the side of the return pipe 19c, and the valve 16 is closed, the first deaeration apparatus 6a is set to the deaeration mode. The deaeration mode is a mode in which the gas dissolved in the solvent stored in the first tank 11 is foamed by the foaming device 13 and removed from the solvent, and is a mode in which the solvent is circulated between the first tank 11 and the foaming device 13 via the return pipe 19c.

As illustrated in FIG. 4, when the three-way valve 12 of the present example is in the closed state, and the valve 16 is opened, the first deaeration apparatus 6a is set to a liquid supply mode. The liquid supply mode is a mode in which the solvent stored in the first tank 11 is supplied to the resist chambers 41, 42, 43, and 44. The closed state of the three-way valve 12 is a state in which the three-way valve 12 does not allow the circulation of the solvent.

The first tank 11 includes an exhaust port 107. The exhaust port 107 is connected to a drain 18 through a valve 17. The exhaust port 107 is provided to release the gas stored in the upper portion of the first tank 11 from the first tank 11. In the following description of the present example, the valve 17 is appropriately opened to release the gas from the first tank 11.

### <10. First Deaeration Apparatus: Foaming Device>

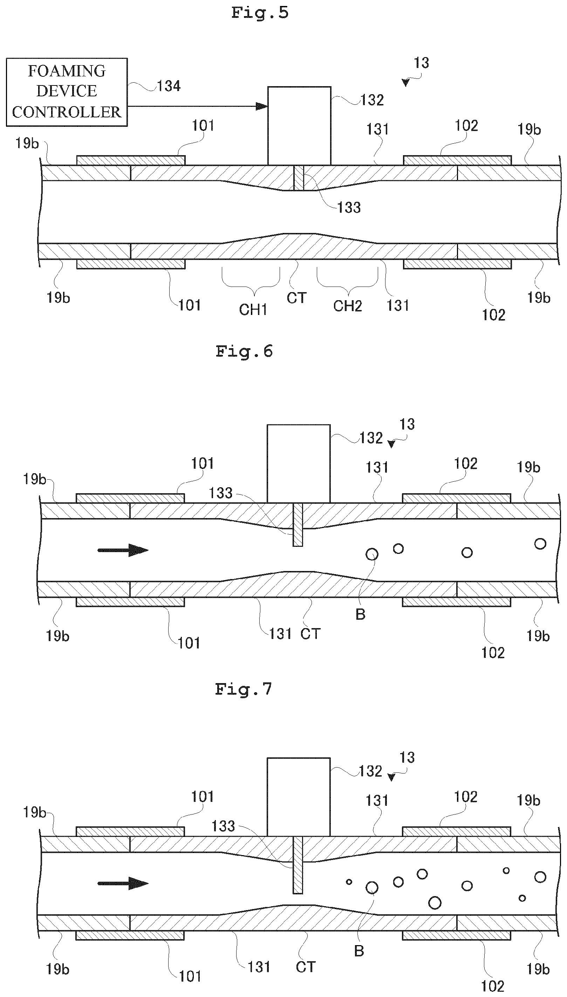

FIG. 5 illustrates a configuration of the foaming device 13 of the present example. The foaming device 13 of the present example has a tubular configuration provided between the upstream outflow pipe 19b and the downstream outflow pipe 19b. That is, the foaming device 13 is provided with a cylindrical base 131. An introduction port for introducing a solvent and a release port for releasing the solvent are set in the base 131. The introduction port of the base 131 is connected to the upstream outflow pipe 19b via a joint 101. The release port of the base 131 is connected to the upstream outflow pipe 19b via a joint 102.

The inner diameter of the base 131 varies depending on the portion of the base 131. That is, the base 131 has a large inner diameter for the introduction port and the release port, and has a small inner diameter for a central portion CT sandwiched between the introduction port and the release port. A first transition portion CH1 whose inner diameter gradually decreases is provided between the introduction port and the central portion CT. A second transition portion CH2 whose inner diameter gradually increases is provided between the central portion CT and the release port.

The second transition portion CH2 corresponds to a secondary passage of the present invention. The central portion CT corresponds to a throttle portion of the present invention, is a passage having a liquid flow path narrower than that of the second transition portion CH2, and is configured to introduce the liquid into the second transition portion CH2. The first transition portion CH1 corresponds to a primary passage of the present invention, and is configured to introduce a liquid to be deaerated into the central portion CT.

A needle 133 is configured to project from and retract from the internal space of the base 131 provided in the central portion CT of the base 131. When the degree of extension of the needle 133 changes, the resistance to the flow of the solvent in the base 131 can be adjusted.

For example, when the needle 133 is fully retracted from the internal space of the base 131, the foaming device 13 fully opens. For example, when the needle 133 is fully projected into the internal space of the base 131, the foaming device 13 fully closes.

A motor 132 is configured to drive the needle 133. The foaming device controller 134 realizes the opening and closing operation of the foaming device 13 by controlling the motor 132.

The needle 133 corresponds to an adjustment mechanism of the present invention, and is configured to adjust the sectional area of the flow path formed by the central portion CT.

When the foaming device 13 is in a fully opened state, the resistance to the flow of the solvent passing through the base 131 is minimized, and the solvent easily flows to the base 131. When the foaming device 13 is in a fully closed state, the resistance to the flow of the solvent passing through the base 131 is maximized, and the solvent hardly flows to the base 131, or the flow of the solvent stops. When the foaming device 13 is in the fully closed state, the solvent may be or may not be allowed to pass through the base.

FIG. 6 illustrates a state in which the solvent is foamed when the foaming device 13 is close to the fully opened state. When the solvent passes through the foaming device 13 in this state, the pressure applied to the solvent in the central portion CT of the base 131 increases. This pressure returns to the original pressure when the solvent is separated from the central portion CT. Such a change in pressure causes the gas dissolved in the solvent not to be dissolved in the solvent, and the gas forms air bubbles B. The foaming device 13 thus foams the solvent.

FIG. 7 illustrates a state in which the solvent is foamed when the foaming device 13 is close to the fully closed state. When the solvent is caused to pass through the foaming device 13 in this state, the pressure applied to the solvent in the central portion CT of the base 131 further increases as compared with the case in FIG. 6. This pressure rapidly drops when the solvent is separated from the central portion CT. Such a change in pressure causes the gas dissolved in the solvent not to be dissolved in the solvent, and the gas forms a large amount of air bubbles B. The amount of air bubbles to be generated in the solvent can be thus adjusted by opening and closing the foaming device 13.

### <11. First Deaeration Apparatus: Sensor>

The sensor 14 is located downstream of the foaming device 13 and measures the amount of air bubbles contained in the flowing solvent. The sensor 14 includes a light emitter that emits laser light and a light receiver that detects laser light. The light emitter and the light receiver are installed so as to sandwich the solvent passage. When a large amount of air bubbles are contained in the flowing solvent, the laser light is disturbed by the air bubbles B accordingly. Such disturbance does not occur when the flowing solvent contains no air bubbles. The sensor 14 thus can measure the amount of air bubbles contained in the flowing solvent by using the output of the light receiver. The sensor 14 is not limited to an optical sensor, but can be configured by, for example, an ultrasonic sensor. In this manner, the sensor 14 is configured to detect the deaeration state of the liquid during the deaeration treatment.

### <12. First Deaeration Apparatus: Pump>

The pump 15 is located downstream of the sensor 14 and is configured to create a flow of solvent. When the pump 15 operates, the solvent stored in the first tank 11 passes through the outflow port 106, the foaming device 13, and the sensor 14, and reaches the branch point 19d.

A specific example of the pump 15 is a liquid sending pump. The liquid sending pump is a pump that can keep the pressure of the liquid constant while adjusting the rotational speed of the motor when a set value of the pressure is given by the controller. The use of such a liquid sending pump can make the discharge amount of the liquid in each nozzle 10 constant with a configuration having a plurality of nozzles 10 on the downstream side. The pump 15 of the present example is not limited to the liquid sending pump, and other pumps can also be used.

### <13. Second Deaeration Apparatus>

As illustrated in FIG. 2, the deaeration chamber 6 of the present example includes two deaeration apparatuses. That is, the deaeration chamber 6 includes the first deaeration apparatus 6a described above and the second deaeration apparatus 6b having the same configuration as the first deaeration apparatus 6a. Similarly to the first deaeration apparatus 6a, the second deaeration apparatus 6b can be operated in the deaeration mode and the liquid supply mode.

That is, similarly to the first deaeration apparatus 6a, the second deaeration apparatus 6b includes a second tank 21, a three-way valve 22, a foaming device 23, a sensor 24, a pump 25, and a valve 26. Similarly to the first deaeration apparatus 6a described above, the second tank 21 is provided with three through holes of an inflow port 205, an outflow port 206, and an exhaust port 207. In addition, the inflow pipe 29a allows the inflow port 205 and the three-way valve 22 to communicate with each other, and the three-way valve 22 allows the solvent supply source 50 and the inflow port 205 to communicate with each other and allows the pump 25 and the inflow port 105 to communicate with each other through the return pipe 29c in the same manner as in the first deaeration apparatus 6a. The foaming device 23, the sensor 24, the pump 25, and the valve 26 are aligned in series through the outflow pipe 29b, and the return pipe 29c allows the branch point 29d and the three-way valve 22 to communicate with each other in the same manner as in the first deaeration apparatus 6a. The second tank 21 includes an exhaust port 207 in the same manner as in the first deaeration apparatus 6a. The exhaust port 207 is connected to a drain 28 through a valve 27. The outflow pipe 29b corresponds to a release passage of the present invention.

In the deaeration chamber 6 of the present example, the first deaeration apparatus 6a and the second deaeration apparatus 6b are arranged in parallel. That is, the upstream pipe 20c connected to the solvent supply source 50 is branched into a branch pipe toward the first deaeration apparatus 6a and a branch pipe toward the second deaeration apparatus 6b at a branch point 19e. The outflow pipe 19b extending from the first deaeration apparatus 6a and the outflow pipe 29b extending from the second deaeration apparatus 6b are connected to a junction pipe 20b at a junction 20a. That is, the solvent in the solvent supply source 50 is deaerated by either the first deaeration apparatus 6a or the second deaeration apparatus 6b and reaches the junction pipe 20b.

### <14. Liquid Supply to Resist Chamber>

Next, with reference to FIG. 2, the pipes used when the deaerated solvent flowing through the junction pipe 20b is supplied to the resist chambers 41, 42, 43, and 44 will be described. These pipes are pipes constituting the coater block 5. That is, the solvent reaching the junction pipe 20b is distributed to the four resist chambers 41, 42, 43, and 44 through various pipes.

The junction pipe 20b communicates with a regulator 52, a regulator 53, a regulator 54, and a pressure sensor 51. The valve 61 or the like is provided in the middle of the pipes, and can control whether to allow the solvent to pass downstream. The regulator 52 or the like is provided in the middle of the pipes, and can control the pressure of the solvent in the downstream. The regulator 52 or the like can set the pressure of the solvent in the downstream within a range from 0 to a predetermined pressure. The predetermined pressure is an upstream pressure in the regulator 52 or the like. That is, the regulator 52 or the like cannot set the pressure of the solvent on the secondary side to a pressure higher than the pressure of the solvent on the primary side.

The junction pipe 20b has a first branch point TP1, a second branch point TP2, and a third branch point PT3, and various branch pipes branch therefrom. At the first branch point TP1, a first support pipe B1 extending from the junction pipe 20b toward the regulator 52 is branched. In the junction pipe 20b, the second branch point TP2 is provided downstream of the first branch point TP1. At the second branch point TP2, a second support pipe B2 extending from the junction pipe 20b toward the regulator 53 is branched. Similarly, in the junction pipe 20b, the third branch point TP3 is provided downstream of the second branch point TP2. At the third branch point TP3, a second support pipe B3 extending from the junction pipe 20b toward the regulator 54 is branched.

The pressure sensor 51 is a pressure gauge provided between the third branch point TP3 and the valve 61. The pressure sensor is configured to measure the pressure applied to the solvent reaching the valve 61. In addition to the valve 61, a valve 62, a valve 63, and a valve 64 are connected in parallel downstream of the pressure sensor 51.

The resist chamber 41 includes a plurality of solvent discharge ports formed of nozzles and the like. The coater block 5 is provided with a valve that controls whether to discharge liquid to various discharge ports.

The coater block 5 includes a pot rinse pipe PTR1, a back rinse pipe BR1, a cap rinse pipe CR1, an edge rinse pipe EBR1, and a pre-wet pipe PW1 as pipes for supplying a solvent to the resist chamber 41.

The pot rinse pipe PTR1 is a pipe intended to supply a solvent to a standby pot for cleaning the nozzle 10. Pot rinsing is a process of cleaning the standby pod in which the resist nozzle stands by. The tip of the nozzle 10 that discharges a photoresist liquid can be cleaned by the solvent supplied to the standby pod. In addition, by filling the inside of the standby pod with the vapor of the solvent, the drying of the tip of the nozzle 10 can be suppressed. The flow rate of the solvent to the resist chamber 41 during the pot rinsing is, for example, 95 ml/min to 130 ml/min.

The back rinse pipe BR1 is a pipe intended to supply a solvent to the resist chamber 41 at the time of back rinsing for cleaning the back surface of the substrate W. The cap rinse pipe CR1 is a pipe intended to supply a solvent to the resist chamber 41 at the time of cleaning the cap that suppresses scattering of the photoresist liquid to the outside of the spin chuck 8. The flow rate of the solvent to the resist chamber 41 at the time of the back rinsing is, for example, 100 ml/min to 130 ml/min.

The edge rinse pipe EBR1 is a pipe intended to supply a solvent to the resist chamber 41 when the photoresist liquid in the peripheral edge portion is removed from the substrate W coated with a photoresist. The flow rate of the solvent to the resist chamber 41 at the time of the edge rinsing is, for example, 15 ml/min to 30 ml/min.

The pre-wet pipe PW1 is a pipe intended to supply a solvent to the resist chamber 41 at the time of pre-wetting performed prior to supplying the photoresist liquid to the substrate W. The flow rate of the solvent to the resist chamber 41 during the pre-wetting is, for example, 75 ml/min to 150 ml/min.

The pot rinse pipe PTR1 is connected to the regulator 52. Similarly, the back rinse pipe BR1 and the cap rinse pipe CR1 are connected to the regulator 53. The edge rinse pipe EBR1 is connected to the regulator 54.

The pre-wet pipe PW1 is directly connected to the pressure sensor 51 without a regulator. The pre-wet processing requires a relatively large amount of solvent, and the pressure to be applied to the pre-wet pipe PW1 is preferably high. In this example, in response to such a request, a regulator for reducing the pressure of the solvent is not provided upstream of the pre-wet pipe PW1.

The valve 91 is in the middle of the pot rinse pipe PTR1. The valve is configured to control whether to allow the solvent to pass through the pot rinse pipe PTR1. The valve 81 is in the middle of the back rinse pipe BR1 and the cap rinse pipe CR1. The valve is configured to control whether to allow the solvent to pass through the back rinse pipe BR1 and the cap rinse pipe CR1. The valve 71 is in the middle of the edge rinse pipe EBR1. The valve is configured to control whether to allow the solvent to pass through the edge rinse pipe EBR1. The valve 61 is in the middle of the pre-wet pipe PW1. The valve is configured to control whether to allow the solvent to pass through the pre-wet pipe PW1.

The coater block 5 has a plurality of resist chambers similar to the resist chamber 41. The pipes for supplying the solvent to these resist chambers have the same configuration as the resist chamber 41.

That is, the coater block 5 includes a pot rinse pipe PTR2, a back rinse pipe BR2, a cap rinse pipe CR2, an edge rinse pipe EBR2, and a pre-wet pipe PW2 as pipes for supplying a solvent to the resist chamber 42.

The pot rinse pipe PTR2 is connected to the regulator 52. Similarly, the back rinse pipe BR2 and the cap rinse pipe CR2 are connected to the regulator 53. The edge rinse pipe EBR2 is connected to the regulator 54. The pre-wet pipe PW2 is directly connected to the pressure sensor 51 without a regulator.

The valve 92 is in the middle of the pot rinse pipe PTR2. The valve is configured to control whether to allow the solvent to pass through the pot rinse pipe PTR2. The valve 82 is in the middle of the back rinse pipe BR2 and the cap rinse pipe CR2. The valve is configured to control whether to allow the solvent to pass through the back rinse pipe BR2 and the cap rinse pipe CR2. The valve 72 is in the middle of the edge rinse pipe EBR2. The valve is configured to control whether to allow the solvent to pass through the edge rinse pipe EBR2. The valve 62 is in the middle of the pre-wet pipe PW2. The valve is configured to control whether to allow the solvent to pass through the pre-wet pipe PW2.

The coater block 5 includes a pot rinse pipe PTR3, a back rinse pipe BR3, a cap rinse pipe CR3, an edge rinse pipe EBR3, and a pre-wet pipe PW3 as pipes for supplying a solvent to the resist chamber 43.

The pot rinse pipe PTR3 is connected to the regulator 52. Similarly, the back rinse pipe BR3 and the cap rinse pipe CR3 are connected to the regulator 53. The edge rinse pipe EBR3 is connected to the regulator 54. The pre-wet pipe PW3 is directly connected to the pressure sensor 51 without a regulator.

The valve 93 is in the middle of the pot rinse pipe PTR3. The valve is configured to control whether to allow the solvent to pass through the pot rinse pipe PTR3. The valve 83 is in the middle of the back rinse pipe BR3 and the cap rinse pipe CR3. The valve is configured to control whether to allow the solvent to pass through the back rinse pipe BR3 and the cap rinse pipe CR3. The valve 73 is in the middle of the edge rinse pipe EBR3. The valve is configured to control whether to allow the solvent to pass through the edge rinse pipe EBR3. The valve 63 is in the middle of the pre-wet pipe PW3. The valve is configured to control whether to allow the solvent to pass through the pre-wet pipe PW3.

Similarly, the coater block 5 includes a pot rinse pipe PTR4, a back rinse pipe BR4, a cap rinse pipe CR4, an edge rinse pipe EBR4, and a pre-wet pipe PW4 as pipes for supplying a solvent to the resist chamber 44.

The pot rinse pipe PTR4 is connected to the regulator 52. Similarly, the back rinse pipe BR4 and the cap rinse pipe CR4 are connected to the regulator 53. The edge rinse pipe EBR4 is connected to the regulator 54. The pre-wet pipe PW4 is directly connected to the pressure sensor 51 without a regulator.

The valve 94 is in the middle of the pot rinse pipe PTR4. The valve is configured to control whether to allow the solvent to pass through the pot rinse pipe PTR4. The valve 84 is in the middle of the back rinse pipe BR4 and the cap rinse pipe CR4. The valve is configured to control whether to allow the solvent to pass through the back rinse pipe BR4 and the cap rinse pipe CR4. The valve 74 is in the middle of the edge rinse pipe EBR4. The valve is configured to control whether to allow the solvent to pass through the edge rinse pipe EBR4. The valve 64 is in the middle of the pre-wet pipe PW4. The valve is configured to control whether to allow the solvent to pass through the pre-wet pipe PW4.

### <15. Operation of Deaeration Apparatus>

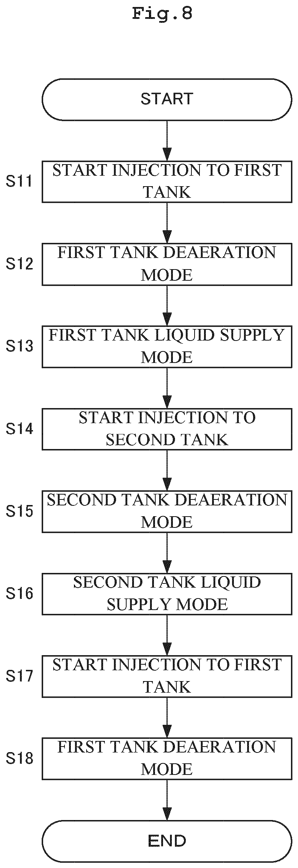

Hereinafter, the operation of the deaeration apparatus according to the present example will be described with reference to the flowchart according to FIG. 8.

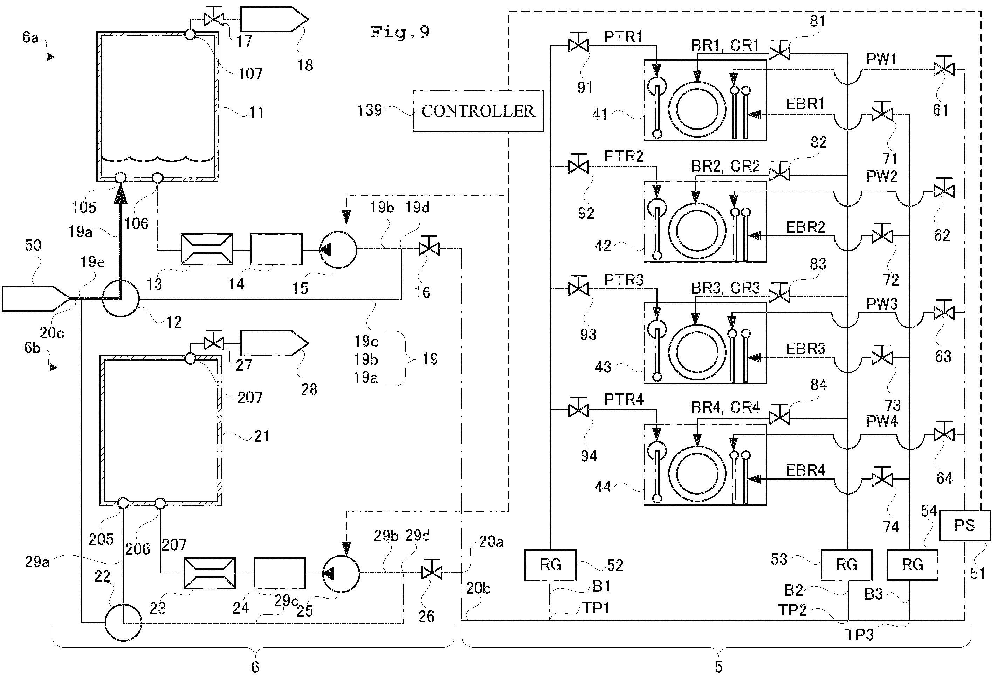

Step S11: Injection of a solvent from the solvent supply source 50 into the first tank 11 in the first deaeration apparatus 6a starts. FIG. 9 illustrates the flow of the solvent in this step. Since the three-way valve 12 in this step is switched to the solvent supply source 50 side, the solvent of the solvent supply source 50 reaches the first tank 11 through the upstream pipe 20c, the three-way valve 12, the inflow pipe 19a, and the inflow port 105. At this time, the pump 15 is not operated, and the valve 16 is closed. Thus, the solvent in this step does not flow through the outflow pipe 19b or the return pipe 19c. That is, the solvent of the solvent supply source 50 is stored in the first tank 11.

Since the three-way valve 22 of the second deaeration apparatus 6b in this step is switched to the return pipe 29c side, the solvent does not flow from the solvent supply source 50 toward the second tank 21.

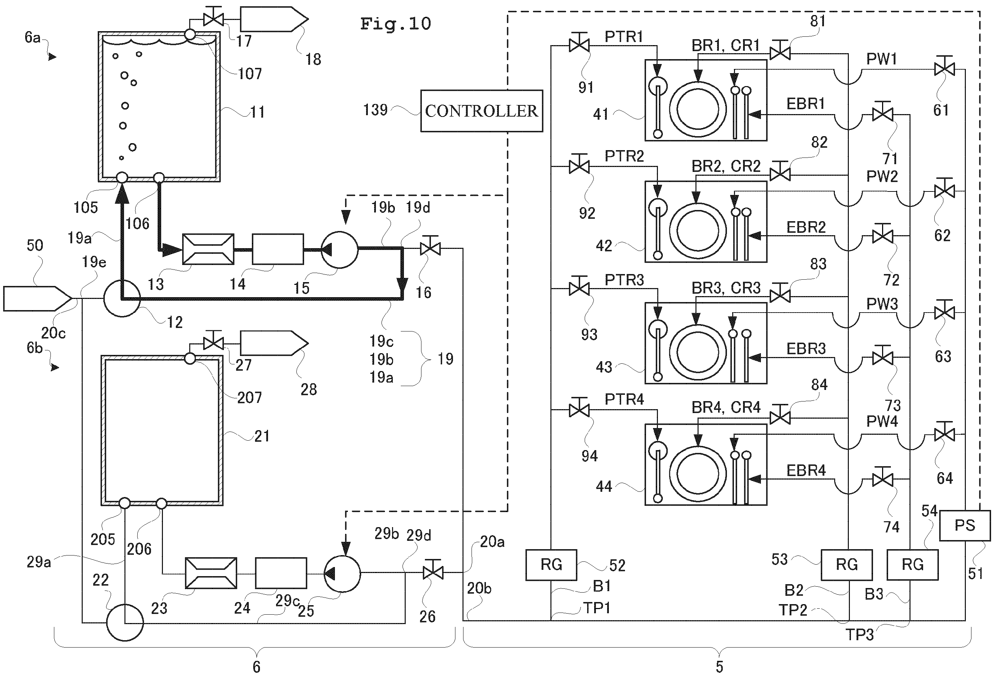

Step S12: When the storage of the solvent in the first tank 11 has been completed, the first deaeration apparatus 6a is set to the deaeration mode. In the deaeration mode, first, the three-way valve 12 is switched to the return pipe 19c side. The pump 15 then operates. FIG. 10 illustrates the flow of the solvent in this step. The solvent in the first tank 11 in this step passes through the outflow port 106, the foaming device 13, the sensor 14, and the pump 15, passes through the return pipe 19c from the branch point 19d to reach the three-way valve 12, and further reaches the inflow port 105 of the first tank 11 from there through the inflow pipe 19a. At this time, the valve 16 is in a closed state.

The air bubbles generated in the foaming device 13, which are mixed in the solvent, pass through the return pipe 19c and return to the first tank 11. Since the air bubbles are lighter than the solvent, the air bubbles accumulate at the upper portion of the first tank 11 and form a gas phase.

The solvent stored in the first tank 11 is continuously deaerated following the path as illustrated in FIG. 10 many times. That is, the first deaeration apparatus 6a of the present example can appropriately adjust the degree of deaeration treatment by increasing or decreasing the number of times of deaerating the solvent. Such adjustment can also be performed in the second deaeration apparatus 6b having the same configuration as the first deaeration apparatus 6a. The detection result of the sensor 14 can be used to determine whether deaeration has been sufficiently completed.

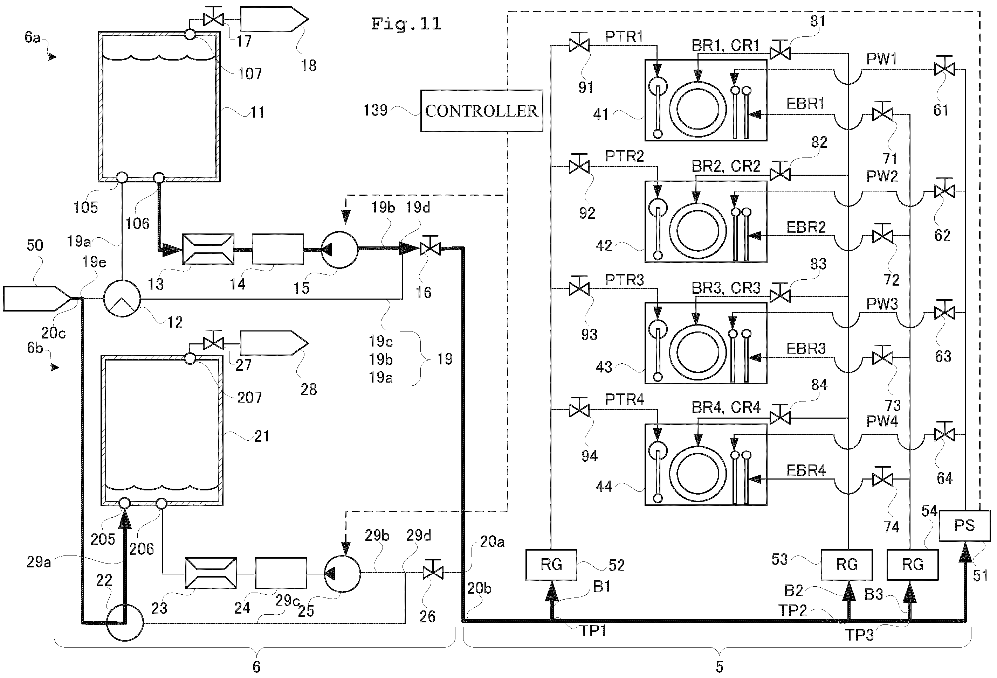

Step S13: FIG. 11 illustrates the flow of the solvent in this step. When the deaeration of the solvent stored in the first tank 11 has been completed, the first deaeration apparatus 6a is set to the liquid supply mode. In the liquid supply mode, first, the three-way valve 12 is closed. The three-way valve 12 in the closed state does not allow the circulation of the solvent. Thus, the solvent in this step does not flow into the first tank 11 from the inflow port 105. Then, the valve 16 is opened. Then, the solvent stored in the first tank 11 passes through the foaming device 13, the sensor 14, the pump 15, and the branch point 19d to reach the valve 16, and further to the branch point TP1. The foaming device 13 at this time is desirably in a fully opened state.

In this step, when any one of the valves 61, 62, 63, and 64, the valves 71, 72, 73, and 74, the valves 81, 82, 83, and 84, and the valves 91, 92, 93, and 94 in the closed state is brought into an opened state, the solvent that has reached the pressure sensor 51 passes through the pipe corresponding to the valves in the open state and reaches the resist chamber.

Step S14: After the first deaeration apparatus 6a is set to the liquid supply mode, supply of the solvent to the second tank 21 in the second deaeration apparatus 6b starts. This operation is a measure in view of the first tank 11 in the first deaeration apparatus 6a becoming empty. FIG. 11 also illustrates the flow of the solvent in this step. Since the three-way valve 22 in this step is switched to the solvent supply source 50 side, the solvent of the solvent supply source 50 reaches the second tank 21 through the upstream pipe 20c, the three-way valve 22, the inflow pipe 29a, and the inflow port 205. At this time, the pump 25 is not operated, and the valve 26 is closed. Thus, the solvent in this step does not flow through the outflow pipe 29b or the return pipe 29c. That is, the solvent of the solvent supply source 50 is stored in the second tank 21.

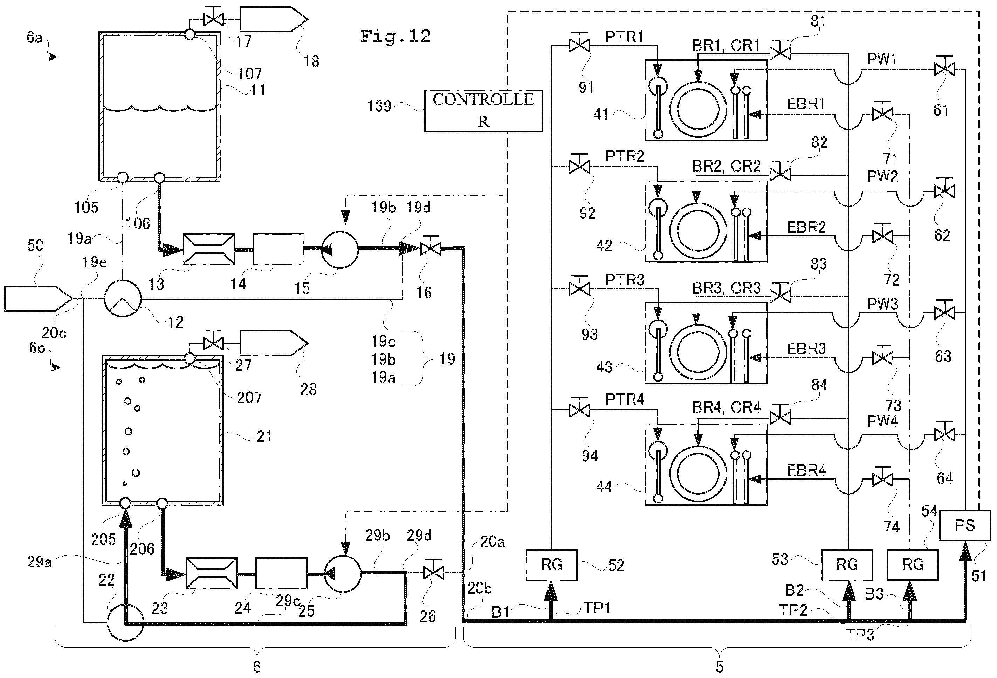

Step S15: When the storage of the solvent in the second tank 21 has been completed, the second deaeration apparatus 6b is set to the deaeration mode. In the deaeration mode, first, the three-way valve 22 is switched to the return pipe 29c side. The pump 25 then operates. FIG. 12 illustrates the flow of the solvent in this step. The solvent in the second tank 21 in this step passes through the outflow port 206, the foaming device 23, the sensor 24, and the pump 25, passes through the return pipe 29c from the branch point 29d to reach the three-way valve 22, and further reaches the inflow port 205 of the second tank 21 from there through the inflow pipe 29a. At this time, the valve 26 is in a closed state. In this manner, the solvent is deaerated by the second deaeration apparatus 6b.

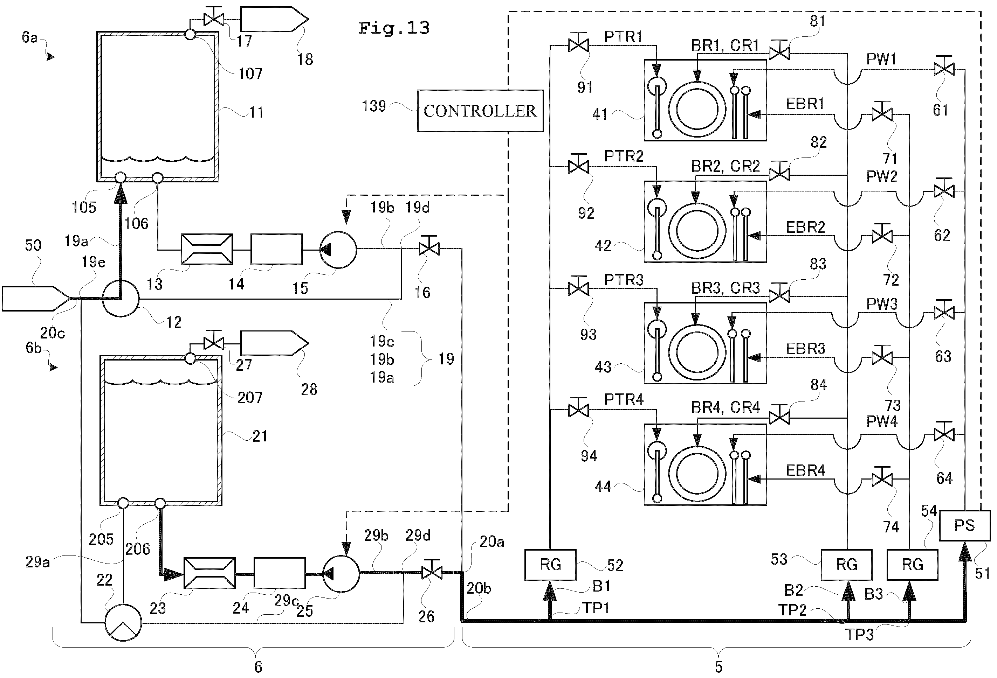

Step S16: When the first tank 11 of the first deaeration apparatus 6a in the liquid supply mode becomes empty, the second deaeration apparatus 6b is set to the liquid supply mode. In the liquid supply mode, first, the three-way valve 22 is closed. The three-way valve 22 in the closed state does not allow the circulation of the solvent. Thus, the solvent in this step does not flow into the second tank 21 from the inflow port 205. Then, the valve 26 is opened. Then, the solvent stored in the second tank 21 passes through the foaming device 23, the sensor 24, the pump 25, and the branch point 29d to reach the valve 26, and further to the branch point TP1. The foaming device 23 at this time is desirably in a fully opened state. FIG. 13 illustrates the flow of the solvent in this step.

Step S17: When the second deaeration apparatus 6b is set to the liquid supply mode, liquid injection into the first tank 11 starts this time. FIG. 13 illustrates the flow of the solvent in this step.

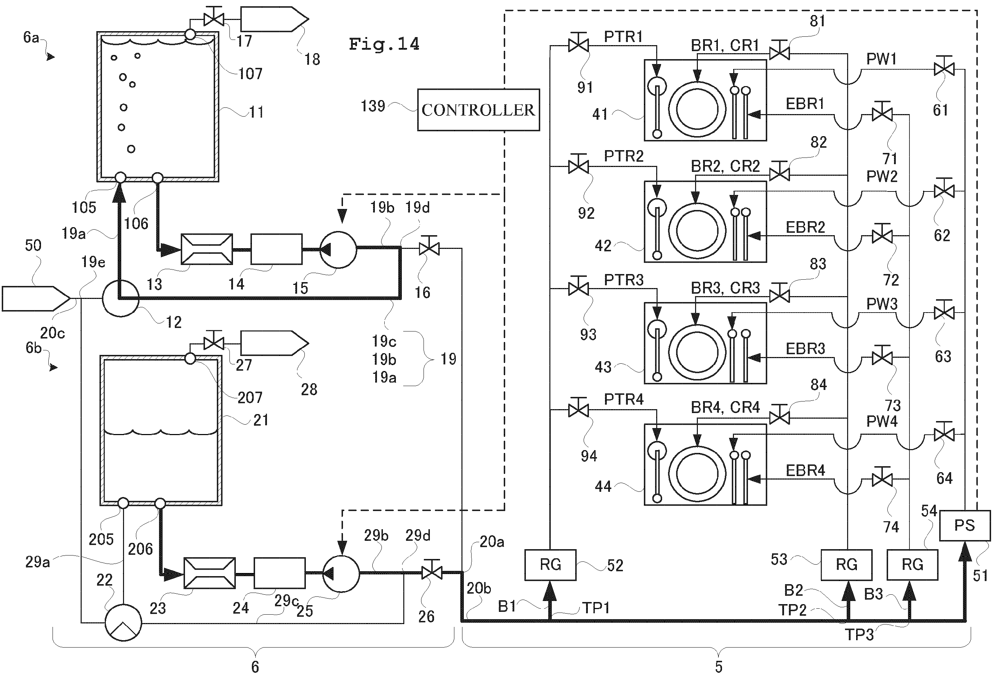

Step S18: When the liquid injection into the first tank 11 has been completed, the first deaeration apparatus 6a is set to the deaeration mode. FIG. 14 illustrates the flow of the solvent in this step. When deaeration of the first tank 11 has been completed, the first deaeration apparatus 6a becomes ready to be in the liquid supply mode. The operation of the deaeration chamber 6 of the present example thus ends.

### <16. Switching Controller>

The controller 139 of the present example exhibits the function of the switching controller of the present invention in this manner. That is, the controller 139 sets the first deaeration apparatus 6a to the liquid supply mode and the second deaeration apparatus 6b to the deaeration mode, thereby supplying the solvent to the resist chambers 41, 42, 43, and 44 through the first deaeration apparatus 6a and performing the deaeration treatment on the solvent through the second deaeration apparatus 6b. The controller 139 can also set the second deaeration apparatus 6b to the liquid supply mode and the first deaeration apparatus 6a to the deaeration mode, thereby supplying the solvent to the resist chambers 41, 42, 43, and 44 through the second deaeration apparatus 6b and performing the deaeration treatment on the solvent through the first deaeration apparatus 6a. When the controller 139 performs the substrate processing while switching the liquid supply source between the first deaeration apparatus 6a and the second deaeration apparatus 6b, the supply of the solvent from the deaeration chamber 6 does not stop.

### <17. Feedback Control with Pressure Sensor>

Next, a feedback control with the pressure sensor 51 will be described with reference to FIG. 2. When the first deaeration apparatus 6a or the second deaeration apparatus 6b is in the liquid supply mode, the pressure sensor 51 measures the pressure applied to the solvent of the pre-wet pipes PW1, PW2, PW3, and PW4. When the measured pressure is less than a reference pressure, the pre-wet processing of the substrate is not sufficiently performed in some cases because of the insufficient pressure of the solvent. Thus, based on the detection result of the pressure sensor 51, the controller 139 increases the output of the pump 15 or the pump 25 so that the pressure to be applied to the solvent of the pre-wet pipes PW1, PW2, PW3, and PW4 becomes the reference pressure. Which pump is used for such feedback control is determined depending on which deaeration apparatus is in the liquid supply mode.

When the feedback control of the solvent pressure is performed based on the pressure applied to the solvent in the pre-wet pipes PW1, PW2, PW3, and PW4 in this manner, various types of processing using a solvent can be reliably performed. In the pre-wet pipes PW1, PW2, PW3, and PW4, a larger amount of solvent flows as compared with other pipes such as the pot rinse pipe PTR1. Thus, the pressure applied to the solvent in the pre-wet pipes PW1, PW2, PW3, and PW4 is higher than the pressure applied to the solvent in the other pipes. Such a pressure difference is realized by the regulators 52, 53, and 54. Thus, when the pressure of the solvent supply system is adjusted based on the pre-wet pipes PW1, PW2, PW3, and PW4, the highest pressure can be reliably realized in the pre-wet pipes among various pipes.

That is, according to the substrate processing system according to the present example, the fluctuation of the pressure generated in the configuration in which the usage amount of the solvent is increased and decreased by the plurality of resist **chambers** is canceled by the feedback control. Thus, the substrate processing can be executed while the solvent is stably supplied.

For example, when one resist chamber 41 among the four resist chambers 41, 42, 43, and 44 uses a solvent, and the remaining three resist chambers 42, 43, and 44 do not use a solvent because the substrate W is being delivered, the pressure sensor 51 is likely to detect a high pressure. This is because only a small amount of solvent is used in the substrate processing system in this state.

On the other hand, when all of the four resist chambers 41, 42, 43, and 44 use a solvent, the pressure sensor 51 is likely to detect a low pressure. This is because a large amount of solvent is used in the substrate processing system in this state.

In the substrate processing system of this example, the feedback control of the pump 15 is performed based on the detection result of the pressure sensor 51. Thus, the detection result of the pressure sensor 51 has a constant value regardless of the state of the substrate processing system. According to the present invention, it is possible to provide a substrate processing system capable of supplying a solvent to each of the resist chambers 41, 42, 43, and 44 at a constant pressure in this manner regardless of the operating conditions of the resist chambers 41, 42, 43, and 44.

### <18. Effect of Present Invention>

The deaeration apparatus 6a described above includes a tank 11 that stores a liquid to be deaerated, a circulation pipe 19 having one end connected to an outflow port 106 of the tank 11 and the other end connected to an inflow port 105 of the tank 11, a pump 15 that is provided in the circulation pipe 19 and sucks and feeds the liquid in the tank 11, and a foaming device 13 that is provided in the circulation pipe 19 and causes the liquid to flow through a throttle portion (central portion CT) having a narrowed flow path section to generate air bubbles from the liquid, wherein deaeration of the liquid stored in the tank 11 is performed by circulating the liquid between the tank 11 and the foaming device 13. With this configuration, the degree of deaeration treatment can be easily changed by changing the degree of circulation. For a solvent on which deaeration is difficult to be performed, circulation of the solvent between the first tank 11 and the foaming device 13 can be performed many times according to the degree of difficulty of deaeration. Thus, the configuration described above can reliably perform deaeration of the solvent.

According to the configuration described above, the foaming device 13 includes the second transition portion CH2 that releases the foamed solvent, the central portion CT that is a passage having a narrower solvent flow path than the second transition portion CH2 and introduces the solvent into the second transition portion CH2, and the first transition portion CH1 that introduces the solvent to be deaerated into the central portion CT. This configuration can realize the foaming device 13 with a simple configuration.

According to the configuration described above, the foaming device 13 includes the needle 133 that adjusts the sectional area of the flow path formed by the central portion CT, and the foaming device controller 134 that controls the needle 133, wherein the foaming device controller 134 controls the needle 133 to adjust the sectional area of the flow path in the central portion CT as the deaeration treatment proceeds. This configuration can continue the deaeration treatment on the solvent while changing the deaeration conditions. Thus, the deaeration treatment can be performed under appropriate conditions.

According to the configuration described above, the sensor 14 that detects the deaeration state of the solvent during the deaeration treatment and the controller 139 that controls the pump 15 are provided, and the controller 139 controls the pump 15 based on the output of the sensor 14. This configuration can change the mode of circulation of the solvent according to the deaeration state. Thus, the deaeration of the solvent can be more reliably performed.

According to the configuration described above, the foaming device 13 is provided on the upstream side of the pump 15. With this configuration, the foaming device 13 can easily foam the solvent.

According to the configuration described above, the outflow pipe 19b for releasing the deaerated solvent is provided. This configuration makes it easy to feed the deaerated solvent into the substrate processing apparatus through the outflow pipe 19b.

According to the configuration described above, the first deaeration apparatus 6a is set to the liquid supply mode and the second deaeration apparatus 6b to the deaeration mode, whereby the solvent is supplied to the nozzle 10 of the resist chambers 41, 42, 43, and 44 through the first deaeration apparatus 6a, and at the same time, the deaeration treatment is performed on the solvent through the second deaeration apparatus 6b. Then, the second deaeration apparatus 6b is set to the liquid supply mode, and the first deaeration apparatus 6a is set to the deaeration mode, whereby the solvent is supplied to the nozzle 10 of the resist chambers 41, 42, 43, and 44 through the second deaeration apparatus 6b, and at the same time, deaeration treatment is performed on the solvent through the first deaeration apparatus 6a. This configuration can perform the deaeration treatment and the liquid supply simultaneously in parallel. **Thus, when** the first tank 11 of one deaeration apparatus becomes empty because of liquid supply, the solvent can be continuously supplied from the first tank 11 of the other deaeration apparatus in which the deaeration treatment has been completed.

### <19. Modification>

The present invention is not limited to the above configuration but can be modified as follows.

### <First Modification>

The deaeration chamber 6 in Example includes two deaeration apparatuses. The number of deaeration apparatuses can be increased or decreased according to the application of the deaeration chamber 6.

### <Second Modification>

The sensor 14 in Example is not necessarily required for the present invention. When the conditions necessary for deaeration are determined in advance, the conditions may be reproduced at the time of deaeration treatment. Thus, according to the present modification, the deaeration chamber 6 can be configured without checking disappearance of air bubbles with the sensor 14.

### <Third Modification>

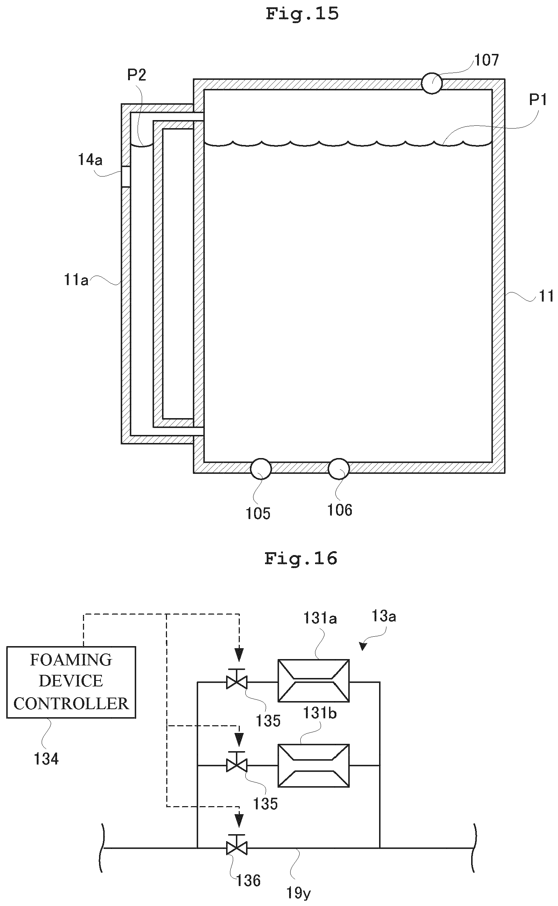

The deaeration chamber 6 of the present modification can be configured also by using an electrostatic capacitive sensor that detects the water level of the first tank 11 in place of the sensor 14 in Example. FIG. 15 illustrates a configuration of the first tank 11 according to the present modification. A liquid guide pipe 11a extending in the vertical directions is attached to the first tank 11. The upper end and the lower end of the liquid guide pipe 11a communicate with the first tank 11. Thus, the height of the liquid level P1 of the solvent stored in the first tank 11 is matched with the height of the liquid level P2 of the solvent guided into the liquid guide pipe 11a. The electrostatic capacitive sensor 14a is in the middle of the liquid guide pipe 11a. The sensor is configured to detect the presence or absence of the liquid level P2. When the deaeration treatment on the solvent stored in the first tank 11 proceeds, the air bubbles foamed from the liquid are stored in the first tank 11, and the liquid level P1 of the first tank 11 decreases. Since the liquid guide pipe 11a communicates with the first tank 11, the liquid level P2 of the liquid guide pipe 11a decreases as the liquid level P1 decreases. When the liquid level P2 in the liquid guide pipe 11a decreases, the electrostatic capacitive sensor 14a detects the decrease in the liquid level P2. Such a detection result of the electrostatic capacitive sensor 14a can be used to determine the end point of the deaeration mode in the first deaeration apparatus 6a. The electrostatic capacitive sensor 14a may be installed on a side surface of the first tank 11 to directly measure the liquid level P1. In this case, the liquid guide pipe 11a is not necessarily required.

### <Fourth Modification>

The foaming device 13 in Example is provided with the needle 133 for controlling the foaming state, but the present invention is not limited to this configuration. A foaming device 13a having no needle 133 can also be configured. FIG. 16 illustrates an example of a configuration according to the present modification. The foaming device 13a of the present modification includes a plurality of bases 131a and 131b. The diameters of the passages through which the solvent passes in the central portion CT are different between the bases 131a and 131b. For example, when the solvent is caused to pass through the base 131a, the solvent can be passed through a wide passage to perform deaeration treatment on the solvent. For example, when the solvent is caused to pass through the base 131b, the solvent can be passed through a narrow passage to perform deaeration treatment on the solvent. The switching of the base used for the deaeration treatment is realized by switching the opened/closed state of the valve 135 attached to each base. The foaming device controller 134 is configured to control opening and closing of the valve 135.

### <Fifth Modification>

As illustrated in FIG. 16, a bypass passage 19y that does not include the bases 131a or 131b may be provided. The bypass passage 19y is a flow path for short-cutting the path between the solvent introduction port and the solvent release port in the foaming device 13 of Example or the foaming device 13a described above. By providing such a bypass passage 19y, the solvent can be quickly flowed out to each of the resist chambers 41, 42, 43, and 44 in the liquid supply mode of the deaeration apparatus. At this time, the circulation of the solvent is not interrupted by the foaming device 13, and thus the load of the pump 15 in the liquid supply mode is minimized.

### <Sixth Modification>

In the configuration of Example, the needle 133 is not adjusted in the deaeration mode, but the needle 133 may be operated during the deaeration mode. For example, as the deaeration treatment of the solvent in the deaeration mode proceeds, the foaming device 13 that has been in the fully opened state may be gradually brought into the fully closed state. Such a configuration can advance the deaeration treatment and reliably perform deaeration on the solvent that is difficult to foam. In addition, for example, as the deaeration treatment on the solvent in the deaeration mode proceeds, the foaming device 13 that has been in the fully closed state may be gradually brought into the fully opened state. Such a configuration can increase the flow rate of the solvent passing through the foaming device 13 over time and can perform efficient deaeration.

The foaming device controller 134 of the present modification is configured to control the needle 133 to adjust the sectional area of the flow path in the central portion CT as the deaeration treatment proceeds.

### <Seventh Modification>

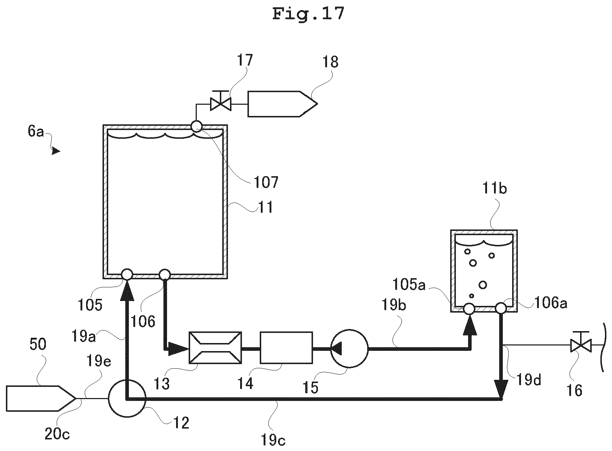

As illustrated in FIG. 17, a trap tank 11b for collecting air bubbles may be provided downstream of the foaming device 13 in the deaeration apparatus 6a in addition to the configuration of Example. The trap tank 11b includes an inflow port 105a and an outflow port 106a at the bottom. The inflow port 105a is connected to the outflow pipe 19b, and the outflow port 106a is connected to the return pipe 19c. The solvent containing air bubbles passing through the outflow pipe 19b reaches the trap tank 11b through the inflow port 105a. The solvent and the air bubbles are separated in the trap tank 11b. The solvent from which the air bubbles have been removed flows out of the trap tank 11b through the outflow port 106a and returns to the tank 11 through the return pipe 19c. This configuration can reliably remove air bubbles of the solvent. The present modification can also be applied to the deaeration apparatus 6b.

### <Eighth Modification>

The shape of the base 131 in Example is straight, but the present invention is not limited to this configuration. The base 131 may be an elbow type.

### <Nineth Modification>

The sectional shape of the central portion CT in Example is tapered, but the present invention is not limited to this configuration. A configuration having a flow path in which the inner diameter of the central portion CT is constant can be adopted.

### <Tenth Modification>

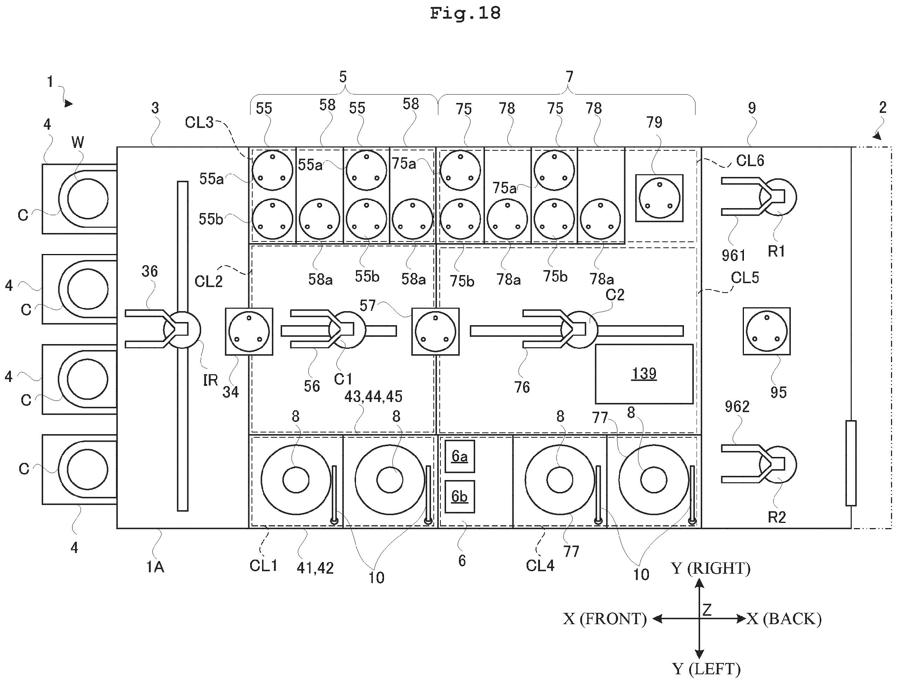

The deaeration apparatus in the configuration described above is provided in the coater block 5, and the deaeration apparatus is configured to supply liquid to the resist chambers 41, 42, 43, and 44. The present invention is not limited to this configuration. As illustrated in FIG. 18, the deaeration apparatus may be provided in the developer block 7. The deaeration chamber 6 of the present modification is disposed in the fourth column CL4 having the developing chamber 77 in the developer block 7. The deaeration chamber 6 of the present modification is configured to supply a developer to the developing chamber 77.

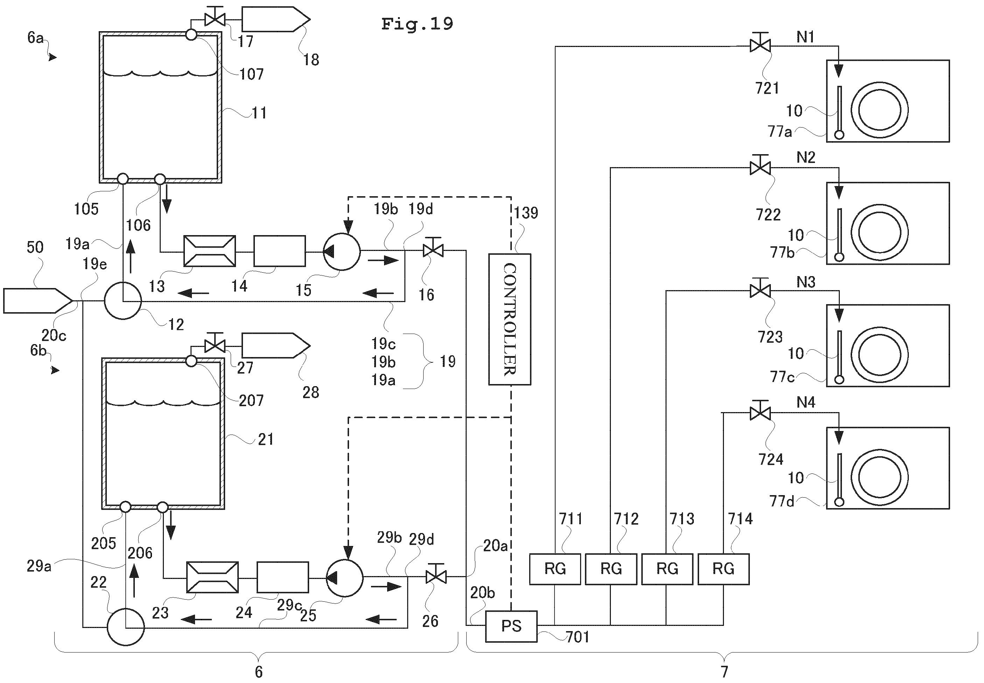

FIG. 19 illustrates a configuration of the deaeration chamber 6 and a state in which the deaeration chamber 6 is connected to pipes included in developing chambers 77a, 77b, 77c, and 77d. The developer block 7 is provided with four developing chambers 77a, 77b, 77c, and 77d in this manner, and these chambers are individually operated to simultaneously perform development processing on up to four substrates W.

As illustrated in FIG. 19, since the configuration of the upstream side of the junction pipe 20b is the same as the configuration of Example described in FIG. 2, a detailed description thereof will be omitted.

According to the present modification, a pressure sensor 701 is provided downstream of the junction pipe 20b. The pressure sensor 701 has the same configuration as the pressure sensor 51 of Example. The pressure sensor is configured to measure the pressure applied to the developer reaching the regulator 711. In addition to the regulator 711, a regulator 712, a regulator 713, and a regulator 714 are connected in parallel downstream of the pressure sensor 701.

The regulator 711 and the like are provided in the middle of the pipes, and they can control the pressure of the developer on the downstream side. This point is the same as the configuration of the regulator 52 and the like of Example.

The primary side of the regulator 711 is connected to the pressure sensor 701, and the secondary side is connected to the nozzle 10 of the developing chamber 77a. The developer having passed through the regulator 711 is supplied to the nozzle 10 through a developer pipe N1. A valve 721 is provided on the secondary side of the regulator 711 and in the middle of the developer pipe N1. The valve 721 is a control valve that selects whether or not to discharge the developer from the nozzle 10.

The primary side of the regulator 712 is connected to the pressure sensor 701, and the secondary side is connected to the nozzle 10 of the developing chamber 77b. The developer having passed through the regulator 712 is supplied to the nozzle 10 through a developer pipe N2. A valve 722 is provided on the secondary side of the regulator 712 and in the middle of the developer pipe N2. The valve 722 is a control valve that selects whether or not to discharge the developer from the nozzle 10.

The primary side of the regulator 713 is connected to the pressure sensor 701, and the secondary side is connected to the nozzle 10 of the developing chamber 77c. The developer having passed through the regulator 713 is supplied to the nozzle 10 through a developer pipe N3. A valve 723 is provided on the secondary side of the regulator 713 and in the middle of the developer pipe N3. The valve 723 is a control valve that selects whether or not to discharge the developer from the nozzle 10.

The primary side of the regulator 714 is connected to the pressure sensor 701, and the secondary side is connected to the nozzle 10 of the developing chamber 77d. The developer having passed through the regulator 714 is supplied to the nozzle 10 through a developer pipe N4. A valve 724 is provided on the secondary side of the regulator 714 and in the middle of the developer pipe N1. The valve 724 is a control valve that selects whether or not to discharge the developer from the nozzle 10.

The present modification has the same effect as the effect according to Example. That is, the present modification can reliably perform deaeration of the developer. In addition, the present modification, in which a plurality of deaeration apparatuses are provided, can set one deaeration apparatus to the liquid supply mode while another deaeration apparatus is set to the deaeration mode. Thus, the supply of the developer can be prevented from being interrupted because of the deaeration treatment.

## Claims

1. A deaeration apparatus comprising:
a tank (11) that stores a liquid to be deaerated;
a circulation pipe (19) having one end connected to an outflow port of the tank (11) and the other end connected to an inflow port of the tank (11);
a pump (15) that is provided in the circulation pipe (19) and sucks and feeds the liquid in the tank (11); and
a foaming device (6a) that is provided in the circulation pipe (19) and causes the liquid to flow through a throttle portion having a narrowed flow path section to generate air bubbles from the liquid,
wherein deaeration of the liquid stored in the tank (11) is performed by circulating the liquid between the tank (11) and the foaming device 6a.

2. The deaeration apparatus according to claim 1, wherein
the foaming device (6a) includes:
an adjustment mechanism that adjusts a sectional area of a flow path in the throttle portion; and
a foaming device (6a) controller that controls the adjustment mechanism, and
the foaming device (6a) controller controls the adjustment mechanism to adjust the sectional area of the flow path in the throttle portion as deaeration treatment proceeds.

3. The deaeration apparatus according to claim 1, the deaeration apparatus comprising:
a sensor (14) that detects a deaeration state of the liquid during deaeration treatment; and
a circulation controller (134) that controls the pump (15),
wherein the circulation controller (134) controls the pump (15) based on an output of the sensor (14).

4. The deaeration apparatus according to claim 1, wherein the foaming device (6a) is provided on an upstream side of the pump (15).

5. The deaeration apparatus according to claim 1, the deaeration apparatus comprising a release passage through which the liquid on which deaeration treatment has been performed is released.

6. A substrate processing apparatus comprising:
the deaeration apparatus according to claim 1; and
a substrate processing chamber (41) that performs predetermined liquid processing on a substrate,
wherein the substrate processing chamber (41) includes a nozzle (10) that discharges a liquid supplied from the deaeration apparatus.

7. A substrate processing apparatus comprising:
the deaeration apparatus according to claim 1;
a substrate processing chamber (41) that performs predetermined liquid processing on a substrate; and
a liquid supply unit that supplies the liquid to the substrate processing chamber (41),
wherein the substrate processing chamber (41) includes a nozzle (10) that discharges a liquid supplied from the liquid supply unit,
the liquid supply unit includes:
a first deaeration apparatus (6a);
a second deaeration apparatus (6b); and
a switching controller that switches modes of deaeration apparatuses, the switching controller:
sets the first deaeration apparatus (6a) to a liquid supply mode and the second deaeration apparatus (6b) to a deaeration mode to supply the liquid to the substrate processing chamber (41) through the first deaeration apparatus (6a) and perform deaeration treatment on the liquid through the second deaeration apparatus; and
sets the second deaeration apparatus (6b) to the liquid supply mode and the first deaeration apparatus to the deaeration mode to supply the liquid to the substrate processing chamber (41) through the second deaeration apparatus and perform deaeration treatment on the liquid through the first deaeration apparatus.

8. A deaeration method for generating air bubbles from a liquid to be deaerated by circulating the liquid to be deaerated through a foaming device (6a) including a throttle portion, the method comprising supplying the liquid from a tank (11) to the foaming device (6a) and returning the liquid released from the foaming device (6a) to the tank (11) to circulate the liquid between the tank (11) and the foaming device (6a).

9. A liquid supply method for supplying a deaerated liquid that has been deaerated by generating air bubbles from a liquid to be deaerated by circulating the liquid to be deaerated in a foaming device (6a) including a throttle portion, the liquid supply method comprising:
supplying a liquid from a first tank (11) to a first foaming device (6a) and returning the liquid released from the first foaming device (6a) to the first tank (11) to circulate the liquid between the first tank (11) and the foaming device (6a) and deaerate the liquid, and at the same time, supplying a deaerated liquid from a second tank (11) that stores the deaerated liquid; and
supplying a liquid from the second tank (11) to a second foaming device (6a) and returning the liquid released from the second foaming device (6a) to the second tank (11) to circulate the liquid between the second tank (11) and the foaming device (6a) and deaerate the liquid, and at the same time, supplying a deaerated liquid from the first tank (11) that stores the deaerated liquid.
